# EUROPEAN PATENT SPECIFICATION

(11) **EP 0 652 817 B1**
(45) Date of publication and mention of the grant of the patent: **11.09.1996**
(21) Application number: 91918466.3
(22) Date of filing: 09.10.1991
(51) Int. Cl.: B27N 1/02

(54) **WOOD FLOUR COMPOSITION**
HOLZMEHLMISCHUNG
COMPOSITION DE FARINE DE BOIS

(30) Priority: 19.10.1990 SE 9003355
(43) Date of publication of application: 17.05.1995
(73) Proprietor: Casco Products AB, 100 61 Stockholm (SE)
(72) Inventor: ANDERSSON, Jan, Olof, S-855 90 Sundsvall (SE)
(74) Representative: Schöld, Zaid
(86) International application number: SE9100678
(87) International publication number: WO9206832

(56) References cited:
- Dialog Information Services, File 350, World Patent Index 63-80, Dialog Accession No. 78-34583A/19, HITACHI KK: "Filter mfd. from Wood Powder and Thermosetting Resin Powder - by Mixing, Moulding and Heating to Cure the Resin"; & JP,B,53 010 695, 780415, 7819 (Basic).

## Description

The present invention relates to a wood flour composition for making moulded wood products, such as boards and mouldings. The invention also concerns a method for producing the wood flour composition, as well as its use. More precisely, the invention bears upon a wood flour composition containing pulverulent wood particles and pulverulent phenolic resin.

It is well-known to make boards and mouldings from glue-coated cellulose-containing products, such as wood chips and wood fibres. Further, it is common that the boards or objects made therefrom and the moulded details are surface-treated, e.g. by painting or laminating. Prior art particle boards and fibreboards suffer from the disadvantage that painting may give the surface a rough texture, especially with machined surfaces, e.g. subsequent to milling, because the surface-treatment has made the fibres or chips "stand on end". To obtain an acceptable surface, the rough surface has to be sanded, and the board painted anew. When the requirements are high, it may be necessary to sand and paint the board several times, which makes the surface treatment expensive. For certain complicated details, sanding may, in addition, be so difficult that the production of such details becomes unprofitable. This for example applies to complicated patterns milled or otherwise formed in the surface of the board. In most cases, such three-dimensional patterns have to be sanded by hand.

Another drawback of prior art board materials is their sensitivity to moisture. Thus, the boards swell when taking up moisture. Already a minor damage to the covering layer of paint or plastic causes ingress of moisture, so that the board swells and the surface layer cracks. When the boards are to be used in a moist environment, it may therefore be necessary to surface-treat the material by a costly laminating operation involving durable and often fibre-reinforced plastic layers.

It has now surprisingly been found that the present invention gives moulded wood products that have none of the above drawbacks.

As recited in the appended claims, the invention comprises a wood flour composition containing a mixture of pulverulent wood and pulverulent phenolic resin. The invention further concerns a method for producing the wood flour composition, as well as its use.

Products made from the wood flour composition according to the invention obtain a surface which is easier to treat, the wood flour making it much easier to treat the surface of the finished product. During varnishing, there are no fibres or chips which "stand on end" from the surface which remains smooth. Thus, it is no longer necessary to sand the surface after it has been painted. Another advantage of the invention is that the composition better fills out a complicated mould than do chips or fibres which are much larger than the pulverulent wood. Thus, complicated details can be conveniently moulded. Further, the wood flour products according to the invention are less sensitive to moisture than products made from conventional particle board or fibreboard which has an internal stress released by moisture and resulting in the formation of cracks. The material according to the invention does however not have such stress. Despite the fact that the composition is mainly based on pulverulent wood particles, it has been found that boards and details made therefrom obtain equivalent or higher strength values than do conventional particle boards, and the same superior strength values as so-called MDF (Medium Density Fibre) boards.

The wood flour composition according to the invention can be used for making moulded boards and many different moulded wood products for various purposes. Owing to its excellent properties, the composition is especially suited for making wood details for moist spaces, e.g. kitchen and bathroom equipment. Mention may here be made of moulded details, such as water-closet seats or kitchen doors with deep decorative patterns in the surface.

By the term "pulverulent wood particles" is meant wood particles having such a particle size that the particles pass a sieve with a mesh size of ≦ 0.5 mm. It is preferred that 75% by weight of the pulverulent wood particles passes a sieve with a mesh size of 0.25 mm, and it is most preferred that 95% of the particles passes a sieve with a mesh size of 0.25 mm. The pulverulent wood particles may consist of waste from the wood industry. When making e.g. particle boards, the fine-grained wood is sorted out, since it causes steam blisters and poor strength in the particle boards. These wood particles can be used in the present wood flour composition. The particles may also be a wood flour obtained by grinding dried wood chips, and another source of raw material is grinding dust from the production of particle boards and fibreboards. Since this dust comes from boards of glue-coated chips, it is impregnated with cured amino resin and, in most cases, also with paraffin. The grinding dust usually has a resin content of 10-15% by weight. Since such dust is a waste product hitherto only deemed fit for combustion, it is used in a preferred embodiment of the invention.

The resin content of the wood flour composition is 1-25% by weight, and the pulverulent wood particles thus constitute 99-75% by weight of the composition. Frequently, it is not necessary to use as much resin as 25% by weight, and better results are obtained if the resin content exceeds 1% by weight. Suitable values for the composition are 2-20% by weight of resin, and 98-80% by weight of pulverulent wood particles. Preferred values are 3-18% by weight of resin, and 97-82% by weight of pulverulent wood particles, and the most preferred values are 4-15% by weight of resin and 96-85% by weight of pulverulent wood particles. The given amount of pulverulent wood particles includes the moisture present therein.

The resin employed in the wood flour composition consists of dry, pulverulent phenolic resin. This has several advantages, such as mixing easily with the fine-grained wood particles. It would, on the other hand, be difficult to mix a liquid resin with the pulverulent wood particles, since the amount of resin is so small. That would require an addition of water, making necessary subsequent drying and grinding operations. The pulverulent resin-wood mixture has excellent storing properties, whereas glue-coated chips used in conventional particle-board production only can be stored for a few hours. The phenolic resin also results in moulded wood products meeting the E1 requirement on formaldehyde release, as well as in products of excellent water resistance. The pulverulent phenolic resin may be a novolac resin or a resol resin. It may further be spray-dried or ground, but it is preferred that a spray-dried resin be used. Moreover, it is desirable that the particle size of the phenolic resin be as small as possible, and in the same order as that of the wood particles.

The moisture content of the prepared wood flour composition is an important factor. Too high a moisture content gives poor strength values for the finished products, while a reduced moisture content gives a higher strength. The moisture content should be between 0 and 15% by weight of the prepared powder mixture, suitably between 0 and 10% by weight, and preferably between 0 and 5% by weight. The pulverulent wood particles should be as dry as possible before being mixed with the resin, and suitably have a moisture content of 0-5% by weight.

The wood flour composition according to the invention is produced by mixing the pulverulent wood particles and the pulverulent phenolic resin, in the amounts stated above, to a homogeneous mixture by means of conventional powder mixers. It may also be suitable to add small amounts of conventional additives, such as hydrophobating agents, release agents, and agents for controlling the electrical conductivity. The prepared wood flour composition can be readily stored and sent to users elsewhere. The wood flour composition can be pressed to boards and mouldings, e.g. by using conventional techniques involving prior art hot presses for making particle boards or moulded wood-chip products respectively. During moulding, the temperature is suitably 100-225°C and the pressure is suitably 1-7.5 MPa.

The invention will now be described in more detail below with the aid of the following non-restricting Examples. By the terms "parts" and "per cent" used in the Examples are meant parts by weight and per cent by weight, unless otherwise stated.

### Example 1

900 g grinding dust (size: 95% of the dust passes a sieve with a mesh size of 0.25 mm) and 100 g spray-dried phenolic resin were mixed in a conventional mixer to a homogeneous mixture. The moisture content was 3% by weight of the total mixture.
Then, the mixture was moulded in a conventional hot mould for 8 min. at 175°C to a 16 mm board. The following values were determined for the board:
Density: 863 kg/m3
perforator value: 2 mg formaldehyde/100 g board
bending strength (MOR): 31.6 MPa
internal bond strength (IB): 1.19 MPa

### Example 2

880 g grinding dust (size: 95% of the dust passes a sieve with a mesh size of 0.25 mm) and 120 g spray-dried phenolic resin were mixed in a conventional mixer to a homogeneous mixture. The moisture content was 4% by weight of the total mixture.
Then, the mixture was moulded in a conventional hot mould for 8 min. at 175°C to a 16-mm board. The following values were determined for the board:
Density: 806 kg/m3
thickness swelling: 12.6% (stored in water for 48 h at 20°C)
internal bond strength (IB): 1.62 MPa

### Example 3

800 g grinding dust (size: 95% of the dust passes a sieve with a mesh size of 0.25 mm) and 200 g spray-dried phenolic resin were mixed in a conventional mixer to form a homogeneous mixture. The moisture content was 4% by weight of the total mixture.
Then, the mixture was moulded in a conventional hot mould for 8 min. at 175°C to a 16 mm board. The following values were determined for the board:
Density: 1130 kg/m3
thickness swelling: 10.6% (stored in water for 48 h at 20°C)
internal bond strength (IB): 2.08 MPa

### Example 4

930 g grinding dust (size: 95% of the dust passes a sieve with a mesh size of 0.25 mm) and 70 g spray-dried phenolic resin were mixed in a conventional mixer to a homogeneous mixture. The moisture content was 4% by weight of the total mixture.
Then, the mixture was moulded in a conventional hot mould for 8 min. at 175°C to a 16 mm board with rounded edges. The following values were determined for the board:
Density: 1003 kg/m3
internal bond strength (IB): 1.24 MPa

### Example 5

900 g wood dust (size: 95% of the dust passes a sieve with a mesh size of 0.25 mm) and 100 g spray-dried phenolic resin were mixed in a conventional mixer to a homogeneous mixture. The moisture content was about 4% by weight of the total mixture.
Then, the mixture was moulded in a conventional hot mould for 8 min. at 175°C to a 16 mm board with rounded edges. The following values were determined for the board: Density: 888 kg/m3
perforator value: 6.0 mg formaldehyde/100 g board
bending strength (MOR): 28.7 MPa

As appears from the above Examples, boards made from the wood flour composition according to the invention have strength values better than those of particle boards and equivalent to those of so-called MDF boards.

## Claims

1. Wood flour composition for making moulded wood products, such as boards and mouldings, **characterised** in that it contains a mixture of
98 - 80% by weight of pulverulent wood particles and
2 - 20% by weight of pulverulent phenolic resin, and that the pulverulent wood particles have such a particle size that the particles pass a sieve with a mesh size of ≦ 0.5 mm.

2. The wood flour composition of claim 1, **characterised** in that it contains a mixture of
96-85% by weight of pulverulent wood particles and
4-15% by weight of pulverulent phenolic resin.

3. The wood flour composition of claim 1, **characterised** in that 75% by weight of the particles passes a sieve with a mesh size of 0.25 mm.

4. The wood flour composition of claim 3, **characterised** in that 95% by weight of the particles passes a sieve with a mesh size of 0.25 mm.

5. The wood flour composition of claim 1, **characterised** in that the pulverulent wood particles consist of grinding dust from the production of particle board and fibreboard.

6. The wood flour composition of claim 1, **characterised** in that the pulverulent wood particles consist of waste from the wood industry or wood flour obtained by grinding dried chips.

7. Method for producing the wood flour composition for making moulded wood products, such as boards and mouldings, **characterised** in that 98 - 80% by weight of pulverulent wood particles having such a particle size that the particles pass a sieve with a mesh size of ≦ 0.5 mm, and
2 - 20% by weight of pulverulent phenolic resin are mixed to a homogeneous mixture.

8. Use of the wood flour composition of claim 1 for making moulded boards.

9. Use of the wood flour composition of claim 1 for making pressure-moulded wood products.

## Patentansprüche

1. Holzmehlmischung zur Herstellung von Formgegenständen aus Holz, wie Platten und Formteile, dadurch gekennzeichnet, daß sie ein Gemisch aus
98 bis 80 Gew.-% fein pulverisierten Holzteilchen und
2 bis 20 Gew.-% pulverisiertem Phenolharz enthalt, und daß die fein pulverisierten Holzteilchen eine Teilchengröße aufweisen, so daß die Teilchen durch ein Sieb mit einer Maschenweite von ≦ 0,5 mm passieren.

2. Holzmehlmischung nach Anspruch 1, dadurch gekennzeichnet, daß sie ein Gemisch aus
96 bis 85 Gew.-% fein pulverisierten Holzteilchen und
4 bis 15 Gew.-% fein pulverisiertem Phenolharz enthält.

3. Holzmehlmischung nach Anspruch 1, dadurch gekennzeichnet, daß 75 Gew.-% der Teilchen durch ein Sieb mit einer Maschenweite von 0,25 mm passieren.

4. Holzmehlmischung nach Anspruch 3, dadurch gekennzeichnet, daß 95 Gew.-% der Teilchen durch ein Sieb mit einer Maschenweite von 0,25 mm passieren.

5. Holzmehlmischung nach Anspruch 1, dadurch gekennzeichnet, daß die fein pulverisierten Holzteilchen aus Schleifstaub von der Herstellung von Spanplatten und Faserplatten bestehen.

6. Holzmehlmischung nach Anspruch 1, dadurch gekennzeichnet, daß die fein pulverisierten Holzteilchen aus Abfall der Holzindustrie oder aus Holzmehl bestehen, das beim Schleifen getrockneter Späne entsteht.

7. Verfahren zur Herstellung einer Holzmehlmischung zur Herstellung von Formgegenstanden aus Holz, wie Platten und Formteile, dadurch gekennzeichnet, daß 98 bis 80 Gew.-% Holzteilchen mit einer Teilchengröße, so daß die Teilchen durch ein Sieb mit einer Maschenweite von ≦ 0,5 mm passieren, und
2 bis 20 Gew.-% fein pulverisiertes Phenolharz zu einem homogenen Gemisch gemischt werden.

8. Verwendung der Holzmehlmischung nach Anspruch 1 zur Herstellung von Formplatten.

9. Verwendung der Holzmehlmischung nach Anspruch 1 zur Herstellung von Preßprodukten aus Holz.

## Revendications

1. Composition de farine de bois, destinée à la fabrication de pièces moulées en bois comme des panneaux et des moulures, caractérisée en ce qu'elle contient un mélange de 98 à 80 % en poids de particules de bois en poudre et de 2 à 20 % en poids de résine phénolique en poudre, et en ce que les particules de bois en poudre ont une taille qui leur permet de passer au travers d'un tamis dont les mailles ont une taille inférieure ou égale à 0,5 mm.

2. Composition de farine de bois, conforme à la revendication 1, caractérisée en ce qu'elle contient un mélange de 96 à 85 % en poids de particules de bois en poudre et de 4 à 15 % en poids de résine phénolique en poudre.

3. Composition de farine de bois, conforme à la revendication 1, caractérisée en ce que 75 % en poids des particules passent au travers d'un tamis dont les mailles ont une taille de 0,25 mm.

4. Composition de farine de bois, conforme à la revendication 3, caractérisée en ce que 95 % en poids des particules passent au travers d'un tamis dont les mailles ont une taille de 0,25 mm.

5. Composition de farine de bois, conforme à la revendication 1, caractérisée en ce que les particules de bois en poudre sont de la poussière de ponçage obtenue lors de la fabrication de panneaux de particules ou de panneaux de fibres.

6. Composition de farine de bois, conforme à la revendication 1, caractérisée en ce que les particules de bois en poudre sont des déchets de l'industrie du bois ou de la farine de bois obtenue par broyage de copeaux séchés.

7. Procédé de production d'une composition de farine de bois, destinée à la fabrication de pièces moulées en bois comme des panneaux et des moulures, caractérisé en ce qu'on brasse, jusqu'à obtenir un mélange homogène, de 98 à 80 % en poids de particules de bois en poudre qui ont une taille qui leur permet de passer au travers d'un tamis dont les mailles ont une taille inférieure ou égale à 0,5 mm, et de 2 à 20 % en poids de résine phénolique en poudre.

8. Emploi d'une composition de farine de bois, conforme à la revendication 1, dans la fabrication de panneaux moulés.

9. Emploi d'une composition de farine de bois, conforme à la revendication 1, dans la fabrication de produits en bois moulés sous pression.
